# EUROPÄISCHE PATENTANMELDUNG

(11) **EP 1 480 007 A1**
(43) Veröffentlichungstag der Anmeldung: **24.11.2004**
(21) Anmeldenummer: 04004693.0
(22) Anmeldetag: 01.03.2004
(51) Int. Cl.: G01B 11/25, B25J 9/16

(54) **Verfahren und Vorrichtung zum Ausrichten von plattenförmigen Werkstücken**

(30) Priorität: 23.05.2003 DE 10323438
(71) Anmelder: Ligmatech Automationssysteme GmbH, 09638 Lichtenberg (DE)
(72) Erfinder: Bohn, Daniel, Dipl.-Ing., 09638 Lichtenberg (DE); Köhler, Heinz, Dipl.-Ing., 09619 Mulda (DE); Tönnigs, Bodo, Dipl.-Ing., 09638 Lichtenberg (DE)
(74) Vertreter: HOFFMANN - EITLE

(57) **Zusammenfassung**

Die Erfindung stellt eine Vorrichtung (10) zum Ausrichten von plattenförmigen Werkstücken (1) bereit, mit einer Greifeinrichtung (2), mittels der das Werkstück (1) aufnehmbar und verfahrbar ist, einer Projektionseinrichtung (4), mittels der mindestens eine Lichtlinie (4') derart auf eine Oberfläche (1') des Werkstücks (1) projizierbar ist, dass die mindestens eine Lichtlinie (4') Schnittpunkte (P1, P2, P3, P4, P5, P6) mit mindestens zwei einen Winkel zueinander einschließenden Rändern (1'', 1''') der Oberfläche (1') bilden, einer optischen Erfassungseinrichtung (6), mittels der die Oberfläche (1') des Werkstücks (1) zumindest im Bereich der Schnittpunkte (P1, P2, P3, P4, P5, P6) erfassbar ist, und einer Steuereinrichtung (8), die mit der Erfassungseinrichtung (6) und der Greifeinrichtung (2) in Verbindung steht und die Greifeinrichtung (2) auf der Grundlage der von der Erfassungseinrichtung (6) erhaltenen Informationen steuert.

## Beschreibung

### Technisches Gebiet

Die vorliegende Erfindung betrifft Verfahren zum Ausrichten von plattenförmigen Werkstücken wie Möbelplatten und dergleichen, bei dem die Werkstücke mittels einer Greifeinrichtung aufgenommen und in einer gewünschten Ablageposition abgelegt werden. Ferner betrifft die Erfindung eine Vorrichtung zur Durchführung dieses Verfahrens.

### Stand der Technik

Beim Handhaben, Fördern und Verpacken von plattenförmigen Werkstücken wie Möbelplatten und dergleichen ist es häufig erforderlich, die Werkstücke beispielsweise von einem Stapel aufzunehmen und anschließend präzise in einer Ablageposition, beispielsweise in einem Verpackungskarton, abzulegen. Aufgrund der ständig ansteigenden Kapazität von Verpackungsoder Fördereinrichtungen, die mit den Werkstücken beschickt werden sollen, wird das Ablegen der Werkstücke häufig mit Roboterarmen oder dergleichen durchgeführt, um einen zügigen Verfahrensablauf zu gewährleisten.

Um ein präzises Ablegen der Werkstücke in der Ablageposition zu gewährleisten ist es bekannt, die Werkstücke beispielsweise als Stapel in einer definierten, ausgerichteten Position bereitzustellen, die in der Steuerung des Roboterarms gespeichert ist, so dass der Roboterarm bei jedem Werkstück dieselbe Hub-/Schwenkbewegung ausführt. Hierfür ist es jedoch erforderlich, jedes einzelne Werkstück eines Stapels genau in der definierten Position auszurichten, was zeitaufwändig ist und bereits bei geringen Positionsabweichungen zu Störungen im Verfahrensablauf führen kann.

Ferner offenbart die DE 199 03 458 A1 eine Anordnung und ein Verfahren zur Montage von Möbelstücken. Die Anordnung besitzt eine Sauggreifer zum Aufnehmen von Möbelplatten sowie mehrere an dem Sauggreifer angebrachte Laserabstandssensoren. Mittels dieser Sensoren werden während einer Bewegung des Sauggreifers oder des aufzunehmenden Möbelstücks Abstandsmessungen durchgeführt, um aus den gemessenen Abstanden auf die Lage des Möbelstücks zu schließen. Anschließend wird das Möbelstück durch den Sauggreifer aufgenommen und in einer gewünschten Position abgelegt. Der Vorgang der Abstandsmessung gemäß der DE 199 03 458 A1 hat sich allerdings als sehr zeitaufwendig erwiesen, da für die Abstandsmessung eine Relativbewegung zwischen Abstandssensoren und Möbelstück erforderlich ist, bevor das Möbelstück aufgenommen werden kann. Hierdurch werden die Taktzeiten übermäßig lang, was auf die Kapazität nachgeschalteter Maschinen wie Verpackungsvorrichtungen und der gleichen beeinträchtigt. Darüber hinaus führt die Notwendigkeit einer Relativbewegung zwischen Abstandssensoren und Möbelstück zu einer aufwendigen Konstruktion.

### Darstellung der Erfindung

Es ist Aufgabe der vorliegenden Erfindung, ein Verfahren und eine Vorrichtung zum Ausrichten von plattenförmigen Werkstücken wie Möbelplatten und dergleichen bereitzustellen, die einen beschleunigten Verfahrensablauf ermöglichen.

Diese Aufgabe wird erfindungsgemäß durch ein Verfahren und eine Vorrichtung zum Ausrichten von plattenförmigen Werkstücken mit den Merkmalen der Ansprüche 1 bzw. 8 gelöst. Vorteilhafte Weiterbildungen der Erfindung sind in den abhängigen Ansprüchen angegeben.

Der Erfindung liegt der Gedanke zugrunde, die Erfassung der Relativposition zwischen einem aufzunehmendem Werkstück und einer Greifeinrichtung derart auszugestalten, dass diese zu einem beliebigen Zeitpunkt und ohne Relativbewegung zwischen Werkstück und Greifeinrichtung durchgeführt werden kann. Zu diesem Zweck wird erfindungsgemäß mindestens eine Lichtlinien auf eine Oberfläche des Werkstücks projiziert, die mindestens drei Schnittpunkte mit mindestens zwei einen Winkel zueinander einschließenden Rändern der Oberfläche bildet, um anschließend die Oberfläche des Werkstücks zumindest im Bereich der Schnittpunkte zu erfassen und hierdurch die Relativposition des Werkstücks zu der Greifvorrichtung auf der Grundlage der Schnittpunkte zu bestimmen. Auf der Grundlage dieser Erfassung wird dann, falls erforderlich, die Relativposition des Werkstücks korrigiert, um dieses in einer genau definierten Ablageposition ablegen zu können.

Auf diese Weise kann die Bestimmung der Relativposition zwischen Werkstück und Greifvorrichtung von der Bewegung der Greifvorrichtung entkoppelt und somit zu jedem beliebigen Zeitpunkt durchgeführt werden, beispielsweise während die Greifvorrichtung gerade das vorherige Werkstück ablegt oder während die Greifvorrichtung das betreffende Werkstück durch eine Hub-/Schwenkbewegung verschiebt. Hierdurch kann auf einen eigenen, zwischengeschalteten Verfahrensschritt zum Erfassen der Relativposition verzichtet werden, was den Verfahrensablauf extrem beschleunigt. Darüber hinaus ist es bei der vorliegenden Erfindung nicht erforderlich, dass die Werkstücke in einem ausgerichteten Stapel bereitgestellt werden, was Arbeitsaufwand und Kosten minimiert.

Dabei ist es gemäß einer Weiterbildung des erfindungsgemäßen Verfahrens bevorzugt, dass das Projizieren der mindestens einen Lichtlinie auf die Oberfläche des Werkstücks und das optische Erfassen der hierdurch gebildeten Schnittpunkte sowie das Bestimmen der Relativposition des Werkstücks zu der Greifvorrichtung während des Aufnehmens und Verfahrens des Werkstücks mittels der Greifvorrichtung durchgeführt werden. Hierdurch ergibt sich ein besonders zügiger und koordinierter Verfahrensablauf, wobei festgestellte Relativabweichungen unmittelbar dadurch korrigiert werden können, dass die Hub/Schrägbewegung der Greifvorrichtung zum Ablegen des Werkstücks entsprechend an die festgestellte Relativabweichung angepasst wird.

Um das Umgebungslicht auszublenden, ist es gemäß einer Weiterbildung der vorliegenden Erfindung bevorzugt, dass die mindestens eine Lichtlinie jeweils durch eine Laserlinie gebildet wird, die besonders bevorzugt im Infrarotbereich liegt.

Im Rahmen der Erfindung ist es vorteilhaft, eine einzelne gekrümmte Lichtlinie einzusetzen, die beispielsweise kreisoder ellipsenförmig ist. Bevorzugt ist es ferner, dass mindestens zwei Lichtlinien gebildet werden, die bevorzugt geradlinig sind.

Diese Lichtlinien werden bevorzugt durch eine Kamera erfasst, insbesondere eine Digitalkamera, welche die Lage der Lichtlinien oder insbesondere ihre Schnittpunkte mit den Rändern des Werkstücks in einem Bild erfasst und dieses zur weiteren Auswertung an einen Computer weitergibt.

Weiterhin stellt die vorliegende Erfindung eine Vorrichtung zur Durchführung des Verfahrens mit den Merkmalen von Anspruch 8 bereit, mit der sich die oben genannten Vorteile des Verfahrens erzielen lassen.

Die Projektionseinrichtung und die optische Erfassungseinrichtung können im Rahmen der vorliegenden Erfindung an einer beliebigen Stelle montiert sein, beispielsweise auch an einem separaten Ständer im Bereich der aufzunehmenden Werkstücke. Im Hinblick auf eine einfache Konstruktion und eine variable Einsetzbarkeit der erfindungsgemäßen Vorrichtung ist es jedoch bevorzugt, dass die Projektionseinrichtung und/oder die optische Erfassungseinrichtung und/oder die Steuereinrichtung an der Greifeinrichtung montiert sind, was auch einen zügigen Verfahrensablauf ermöglicht.

Dabei ist es besonders bevorzugt, dass die Erfassungseinrichtung durch eine Kamera, insbesondere eine Digitalkamera, gebildet ist, welche die Lage der Lichtlinien oder insbesondere ihre Schnittpunkte mit den Rändern des Werkstücks in einem Bild erfasst und dieses zur weiteren Auswertung an einen Computer weitergibt. Bei dem Computer kann es sich um einen herkömmlichen, separat aufgestellten PC handeln. Im Hinblick auf eine kompakte Vorrichtung mit geringer Störanfälligkeit ist es jedoch vorteilhaft, wenn die Steuereinrichtung und die Erfassungseinrichtung integriert sind, beispielsweise in Form einer mit einem Mikrocomputer ausgestatteten Digitalkamera.

### Kurze Beschreibung der Zeichnungen

- Fig. 1: zeigt schematisch eine Vorrichtung zum Ausrichten von plattenförmigen Werkstücken gemäß einer bevorzugten Ausführungsform der vorliegenden Erfindung;
- Fig. 2: zeigt schematisch wesentliche Schritte einer bevorzugten Ausführungsform des erfindungsgemäßen Verfahrens.

### Ausführliche Beschreibung bevorzugter Ausführungsformen

Bevorzugte Ausführungsformen der vorliegenden Erfindung werden nachfolgend ausführlich unter Bezugnahme auf die begeleitenden Zeichnungen beschrieben.

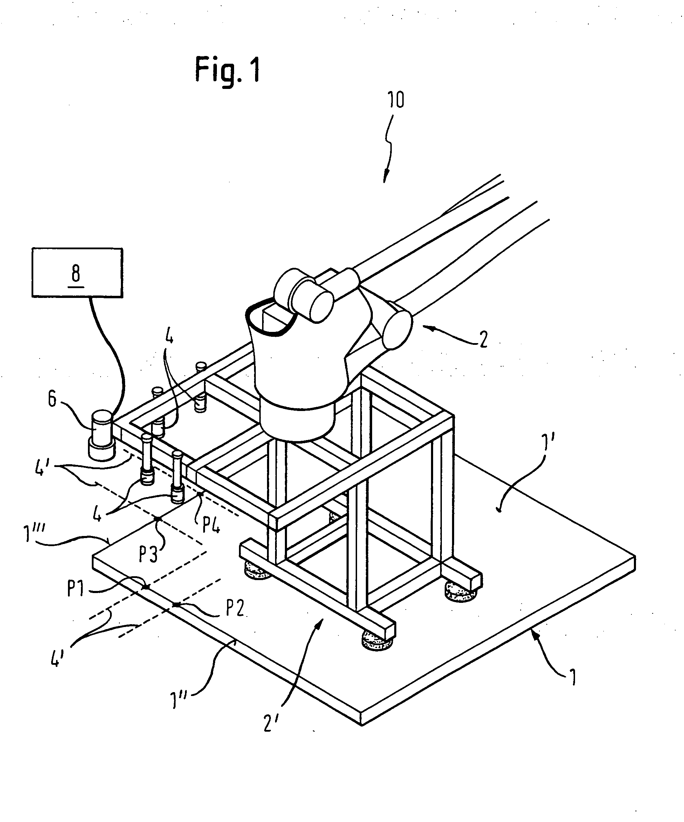

Fig. 1 zeigt schematisch eine Vorrichtung 10 zum Ausrichten von plattenförmigen Werkstücken 1 gemäß einer bevorzugten Ausführungsform der vorliegenden Erfindung. Die Vorrichtung 10 besitzt eine Greifeinrichtung 2 in Form eines Robotergelenkarms, der in der vorliegenden Ausführungsform mit einer Vakuumsaugeinrichtung 2' zum Greifen mindestens eines Werkstücks 1 ausgestattet ist. An dem Roboterarm 2 sind über einen Querträger mehrere Laserlinienprojektoren 4 sowie zwei Digitalkameras 6 angebracht, von denen in Fig. 1 nur eine zu erkennen ist. Der Anzahl an Digitalkameras richtet sich in erster Linie nach dem Abmessungen des Werkstücks und den Anforderungen an die Erfassungsgenauigkeit. Bei kleinen Werkstücken kann eine einzelne Kamera 6 ausreichend sein, während bei länglichen Werkstücken zwei oder mehr Kameras bevorzugt sind.

Die Laserlinienprojektoren 4 projizieren jeweils zumindest eine Laserlichtlinie 4' im Infrarotbereich auf eine zugewandte Oberfläche 1' des Werkstücks 1. Die Digitalkamera ist mit einem nicht gezeigten Infrarotlichtfilter ausgestattet und besitzt ein Bildfeld, das der Oberfläche 1' des Werkstücks 1 zugewandt ist, um zumindest abschnittsweise Aufnahmen der Oberfläche 1' machen zu können. Obgleich die Laserlinienprojektoren 4 und die Digitalkameras 6 in der vorliegenden Ausführungsform direkt an dem Roboterschwenkarm 2 angebracht sind, ist es im Rahmen der Erfindung ebenso möglich, diese unabhängig vorzusehen, beispielsweise an einem Ständer, der neben dem zu erfassenden Werkstück 1 positioniert ist.

Ferner umfasst die Vorrichtung 10 eine Steuereinrichtung 8 in Form eines Personal Computers (PC), der mit den Digitalkameras 6 und dem Roboterschwenkarm 2 in Verbindung steht. Auf diese Weise kann der PC Bilddaten von den Digitalkameras erhalten und auf dieser Grundlage den Roboterschwenkarm 2 steuern oder zumindest den Roboterschwenkarm 2 mit Daten versorgen, die zur Steuerung des Roboterschenkarms 2 dienen. Obgleich die Steuereinrichtung 8 in der vorliegenden Ausführungsform als separater PC vorgesehen ist, ist es selbstverständlich ebenso möglich, die Steuereinrichtung mit anderen Komponenten zu integrieren, beispielsweise mit zumindest einer Digitalkamera 6 oder auch einer Steuereinrichtung des Roboterschwenkarms 2.

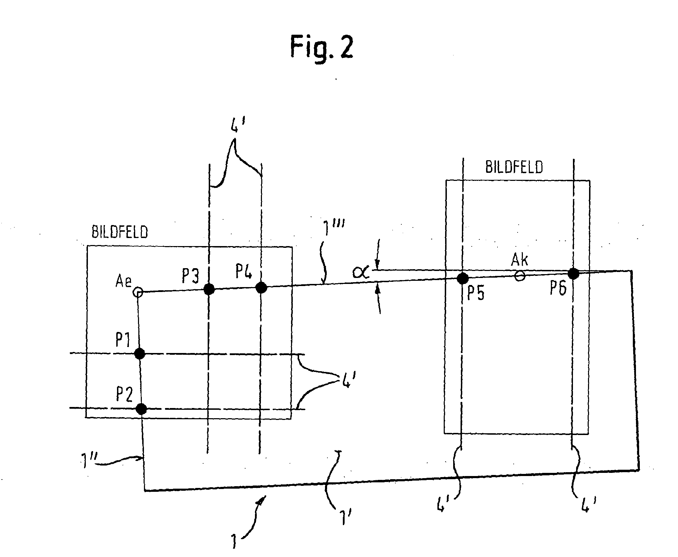

Der Betrieb der erfindungsgemäßen Vorrichtung 10 bzw. eine Ausführungsform des erfindungsgemäßen Verfahrens werden nachfolgend unter Bezugnahme auf Figur 2 beschrieben.

Zunächst wird ein plattenförmiges Werkstück 2, beispielsweise eine Möbelfront, ein Schubladenelement oder dergleichen, in einer Aufnahmeposition bereitgestellt, beispielsweise in Form mehrerer gestapelter Werkstücke, die zwar grob übereinander angeordnet sind, jedoch nicht aufwändig zueinander ausgerichtet wurden. Anschließend wird der Roboterschwenkarm 2 derart verfahren, dass er mit seiner Vakuumsaugeinrichtung 2' an der Oberfläche 1' des Werkstücks 1 angreifen und dieses somit aufnehmen kann. Danach kann das Werkstück 1 durch Verschwenken und gegebenenfalls Verdrehen oder Anheben des Roboterschwenkarmes 2 verfahren und in einer gewünschten Ablageposition abgelegt werden.

Sobald der Roboterschwenkarm 2 das Werkstück 1 aufgenommen hat, projizieren die Laserlinienprojektoren 4 mehrere Laserlinien 4' auf die Oberfläche 1' des Werkstücks 1. Diese Laserlinien sind so ausgelegt, dass sie jeweils mindestens einen Schnittpunkt P1, P2, P3, P4, P5, P6 mit einem von zwei einander kreuzenden Rändern 1", 1"' der Oberfläche 1' bilden.

Währenddessen sind auch die an dem Roboterschwenkarm 2 angebrachten Digitalkameras 6 der Oberfläche 1' des Werkstücks 1 zugewandt und besitzen jeweils ein in Fig. 2 umrandetes Bildfeld, das wie in Fig. 2 gezeigt die Oberfläche 1' und die Schnittpunkte P1 bis P6 zumindest teilweise erfasst. Die Schnittpunkte P1 bis P6 stellen sich als Diskontinuitäten der Laserlinien 4' dar, da die Laserlichtlinien 4' außerhalb des Werkstücks 1 je nach Hintergrund überhaupt nicht mehr sichtbar oder nur abgewinkelt oder geknickt sichtbar sind. Auf diese Weise lassen sich die Schnittpunkte P1 bis P6 in Bildaufnahmen, die durch die digitalen Kameras 6 aufgenommen werden, deutlich sowohl visuell als auch durch mathematische Auswerteroutinen, die die Diskontinuitäten an den Lichtlinien 4' analysieren, identifizieren.

Die Digitalkameras 6 geben die Bilder, die sie von der Oberfläche 1' des Werkstücks 1 aufgenommen haben, über eine Datenleitung an den PC 8 weiter, der die Lage der Schnittpunkte P1 bis P6 auswertet und hieraus den Verlauf der Kanten 1", 1"' und damit die Relativposition des Werkstücks 1 im Verhältnis zum Roboterschwenkarm berechnet. Die Relativposition kann dabei einerseits durch eine horizontale Verschiebung des Werkstücks 1 als auch durch eine Verdrehung des Werkstücks 1 um einen Winkel α berechnet werden.

Falls der PC 8 feststellt, dass die Relativposition des Werkstücks 1 nicht mit einer vorbestimmten Relativposition übereinstimmt, die beispielsweise in der Steuerung des Roboterschwenkarmes oder dem PC gespeichert sein kann, gibt der PC 8 einen Steuerbefehl an den Roboterschwenkarm 2 bzw. an dessen Steuerung aus, die Abweichung zwischen der tatsächlichen und der vorbestimmten Relativposition zu korrigieren. Diese Korrektur kann dadurch erfolgen, dass der Roboterarm 2 während seiner Schwenk-/Hubbewegung in die Ablageposition eine entsprechende Korrektur Hub/Schwenkbewegung vornimmt bzw. die Sollkoordinaten der Ablageposition korrigiert werden. Unter Berücksichtigung dieser Korrektur legt der Roboterschwenkarm das Werkstück 2 in einer gewünschten, definierten Ausrichtung in der Ablageposition ab, sodass ein Verfahrenstakt abgeschlossen ist und das nächste Werkstück 2 in der Aufnahmeposition aufgenommen werden kann.

Auf diese Weise ermöglichen die erfindungsgemäße Vorrichtung und das erfindungsgemäße Verfahren, aufgenommene Werkstücke 1 stets in einer genau definierten Ablageposition abzulegen, selbst wenn die Werkstücke nicht in einem genau ausgerichteten Zustand oder einer genau definierten Aufnahmeposition zugeführt werden. Darüber hinaus können sowohl die Erfassung möglicher Abweichung der Relativposition zwischen Werkstück und Roboterarm oder auch einem anderen Bezugspunkt sowie die unmittelbare Korrektur dieser Abweichung problemlos während der Hub-/Schwenkbewegung des Roboterschwenkarms 2 durchgeführt werden, sodass der Ausrichtvorgang die Arbeitsgeschwindigkeit des Roboterschwenkarmes nicht beeinträchtigt und ein zügiger und störungsfreier Verfahrensablauf ermöglicht wird.

## Patentansprüche

1. Verfahren zum Ausrichten von plattenförmigen Werkstücken (1), insbesondere Möbelplatten, mit den Schritten:
a) Aufnehmen und Verfahren des Werkstücks (1) mittels einer Greifeinrichtung (2),
b) Projizieren mindestens einer Lichtlinie (4') auf eine Oberfläche (1') des Werkstücks (1), die mindestens drei Schnittpunkte (P1, P2, P3, P4, P5, P6) mit mindestens zwei einen Winkel zueinander einschließenden Rändern (1" , 1''') der Oberfläche (1') bilden,
c) optisches Erfassen der Oberfläche (1') des Werkstücks (1) zumindest im Bereich der Schnittpunkte (P1, P2, P3, P4, P5, P6) und Bestimmen der Relativposition des Werkstücks (1) zu der Greifvorrichtung (2) auf der Grundlage der Schnittpunkte,
d) Korrigieren der Relativposition des Werkstücks (1), falls diese von einer vorbestimmten Relativposition abweicht, und
e) Ablegen des Werkstücks (1) in einer Ablageposition.

2. Verfahren nach Anspruch 1, **dadurch gekennzeichnet, dass** die Schritte b) und c) simultan zu Schritt a) durchgeführt werden.

3. Verfahren nach Anspruch 1 oder 2, **dadurch gekennzeichnet, dass** die mindestens eine Lichtlinie (4') durch eine Laserlinie gebildet wird, die bevorzugt im Infrarotbereich liegen.

4. Verfahren nach einem der vorhergehenden Ansprüche, **dadurch gekennzeichnet, dass** die mindestens eine Lichtlinie (4') gekrümmt ist.

5. Verfahren nach einem der vorhergehenden Ansprüche, **dadurch gekennzeichnet, dass** mindestens zwei Lichtlinien (4') gebildet werden, die bevorzugt geradlinig sind.

6. Verfahren nach einem der vorhergehenden Ansprüche, **dadurch gekennzeichnet, dass** die Lage der Schnittpunkte (P1, P2, P3, P4, P5, P6) durch mindestens eine Kamera (6) erfasst wird, bevorzugt eine Digitalkamera.

7. Verfahren nach einem der vorhergehenden Ansprüche, **dadurch gekennzeichnet, dass** die Relativposition des Werkstücks (1) in einem Computer (8) basierend auf der Lage der Schnittpunkte (P1, P2, P3, P4, P5, P6) berechnet wird.

8. Vorrichtung (10) zum Ausrichten von plattenförmigen Werkstücken (1), insbesondere Möbelplatten, mit:
einer Greifeinrichtung (2), mittels der das Werkstück (1) aufnehmbar und verfahrbar ist,
einer Projektionseinrichtung (4), mittels der mindestens eine Lichtlinie (4') derart auf eine Oberfläche (1') des Werkstücks (1) projizierbar ist, dass die mindestens eine Lichtlinie (4') Schnittpunkte (P1, P2, P3, P4, P5, P6) mit mindestens zwei einen Winkel zueinander einschließenden Rändern (1", 1"') der Oberfläche (1') bilden,
einer optischen Erfassungseinrichtung (6), mittels der die Oberfläche (1') des Werkstücks (1) zumindest im Bereich der Schnittpunkte (P1, P2, P3, P4, P5, P6) erfassbar ist, und
einer Steuereinrichtung (8), die mit der Erfassungseinrichtung (6) und der Greifeinrichtung (2) in Verbindung steht und die Greifeinrichtung (2) auf der Grundlage der von der Erfassungseinrichtung (6) erhaltenen Informationen steuert.

9. Vorrichtung nach Anspruch 8, **dadurch gekennzeichnet, dass** die Projektionseinrichtung (4) durch mindestens zwei Laserlinienprojektoren gebildet ist, die bevorzugt Laserlinien (4') im Infrarotbereich ausstrahlen.

10. Vorrichtung nach Anspruch 8 oder 9, **dadurch gekennzeichnet, dass** die optische Erfassungseinrichtung (6) durch mindestens eine digitale Kamera gebildet ist, die bevorzugt mit einem Infrarotlichtfilter ausgestattet ist und/oder monochrom arbeitet.

11. Vorrichtung nach einem der Ansprüche 8 bis 10, **dadurch gekennzeichnet, dass** die Steuereinrichtung (8) durch einen Computer gebildet ist.

12. Vorrichtung nach einem der Ansprüche 8 bis 11, **dadurch gekennzeichnet, dass** die Greifeinrichtung (2) durch einen Robotergelenkarm gebildet ist, der bevorzugt eine Vakuumsaugeinrichtung (2') zum Greifen mindestens eines Werkstücks (1) aufweist.

13. Vorrichtung nach einem der Ansprüche 8 bis 12, **dadurch gekennzeichnet, dass** die Projektionseinrichtung (4) und/oder die optische Erfassungseinrichtung (6) und/oder die Steuereinrichtung (8) an der Greifeinrichtung (2) montiert sind.
